Europäisches Patentamt

European Patent Office

Office européen des brevets

(11) Numéro de publication: **0 057 131**
A1

## (12) DEMANDE DE BREVET EUROPEEN

(21) Numéro de dépôt: 82400098.8

(22) Date de dépôt: 20.01.82

(51) Int. Cl.³: **B 23 K 9/02**
B 23 Q 15/14

(30) Priorité: 26.01.81 FR 8101347

(43) Date de publication de la demande:
04.08.82 Bulletin 82/31

(84) Etats contractants désignés:
AT BE CH DE FR GB IT LI LU NL SE

(71) Demandeur: LA SOUDURE AUTOGENE FRANCAISE
75, Quai d'Orsay
F-75321 Paris Cedex 07(FR)

(72) Inventeur: Fillonneau, Marc
La Vernière Le Tallud
F-79200 Parthenay(FR)

(74) Mandataire: Leclercq, Maurice et al,
L'AIR LIQUIDE SOCIETE ANONYME POUR L'ETUDE ET
L'EXPLOITATION DES PROCEDES GEORGES CLAUDE
75, Quai d'Orsay
F-75321 Paris Cedex 7(FR)

(54) Dispositif d'asservissement de la position et de vitesse de travail d'un outil.

(57) Dispositif d'asservissement de la position et de la vitesse d'un outil, par exemple une torche de soudage (3) au moyen de trois palpeurs (5a, 6a, 7a) commandant un vérin électrique (23) et un motoréducteur (18) agissant respectivement sur la distance de la torche (3) au point de soudage (P) et sur son inclinaison, en fonction de la configuration de la pièce.

Dispositif destiné au soudage de conteneurs, de charpentes, de silos.

FIG.1

La présente invention a pour objet un dispositif d'asservissement de la position et de la vitesse de travail d'un outil en fonction de la pièce à travailler.

Il existe des dispositifs d'asservissement électroniques, mais ils se révèlent très coûteux, des dispositifs d'asservissement programmables, mais ces dispositifs cumulent les erreurs de tolérances, si en cours de traitement la pièce subit des modifications géométriques et dimensionnelles.

Le dispositif selon l'invention a pour objet de remédier à ces inconvénients en s'affranchissant d'un programme, par un travail en direct sans passer par un autre élément que la pièce, permettant ainsi, si ladite pièce se déforme, de tenir compte automatiquement de la modification de ses dimensions.

Le dispositif selon l'invention permet à un outil de suivre un profil quelconque, non répétitif, sur une grande longueur, de déterminer le sens de déplacement de l'outil (avance/recul), afin d'ajuster sa vitesse d'évolution en conséquence, et d'assurer le positionnement correct dudit outil, même si la pièce se déforme en cours de traitement.

Le dispositif selon l'invention s'applique plus particulièrement à un ensemble de soudage, par exemple de panneaux à ondes sur des longerons pour former des conteneurs, des silos, ou toute autre capacité, mais ce dispositif peut être utilisé également pour tous autres travaux d'usinage nécessitant un suivi précis, par exemple copiage, meulage, etc ...

Le dispositif selon l'invention est constitué de trois palpeurs : un palpeur principal, et deux palpeurs secondaires, montés sur un axe vertical porté par le bâti mobile sur lequel la torche de soudage est fixée, lesdits palpeurs étant maintenus en appui et se déplaçant sur la pièce à souder, en l'occurrence, un panneau à ondes, lesdits palpeurs commandant chacun un potentiomètre agissant sur un vérin électrique déterminant d'une part, la distance de la torche de soudage à la pièce et son positionnement afin que l'axe de ladite torche concourt avec l'axe du cordon de soudure à réaliser et d'autre part, sur un moto-réducteur permettant la rotation autour de cet axe dans un sens ou dans un autre, si la pièce à souder présente une partie concave ou une partie convexe.

Le palpeur principal est disposé dans le même plan que la torche de soudage, les palpeurs secondaires étant décalés plus ou moins par rapport au palpeur principal afin de rendre l'ensemble plus sensible.

L'invention sera mieux comprise à la lecture de la description qui suit d'une de ses réalisations, à savoir le soudage d'un panneau à ondes sur un longeron, et à l'examen des dessins annexés sur lesquels :

La figure 1 est une vue schématique en perspective montrant les éléments essentiels du dispositif selon l'invention.

La figure 2 est une vue en élévation du dispositif selon l'invention.

La figure 3 est une vue en coupe selon la ligne III-III de la figure 2.

La figure 4 est une vue en plan du dispositif selon l'invention.

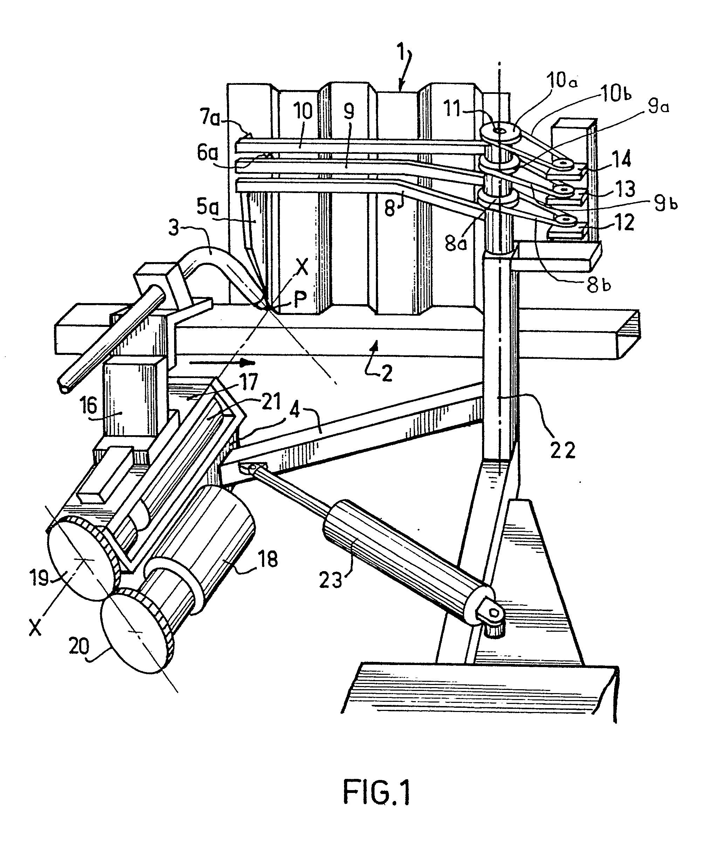

En se reportant aux figures, il s'agit (figure 1) de souder un panneau à ondes 1 sur un longeron 2 pour la réalisation par exemple d'un conteneur, au moyen d'une torche de soudage 3 portée par un bâti 4 monté sur un chariot mobile, non représenté, se déplaçant de gauche à droite devant l'ensemble panneau à ondes - longeron. Pour ce faire, l'ensemble panneau à ondes et longeron est ajusté et fixé sur un bâti non représenté.

De même, comme indiqué précédemment, le bâti 4 portant la torche de soudage 3 est monté sur un chariot se déplaçant à translation sur un rail, la vitesse de translation étant fonction du type de soudage à effectuer. Toutefois, la torche de soudage 3 doit toujours être à une distance constante du point d'impact P à souder ; l'axe de la torche doit donc concourir en permanence avec l'axe du cordon de soudure, quelles que soient les imperfections du bord du panneau 1 ou sa déformation sous l'effet de la chaleur, une fois le réglage de départ effectué par l'opérateur. En conséquence, lorsque la torche 3 rencontre une onde elle doit pivoter autour d'un axe concourant avec le point P de soudage.

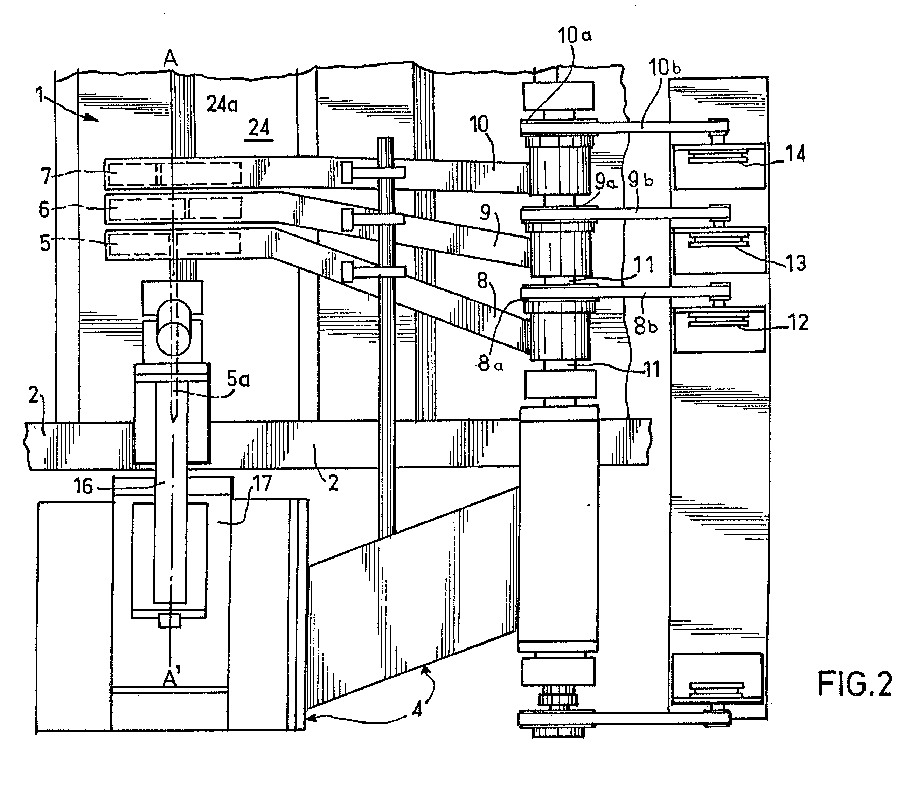

En se reportant aux figures 2, 3 et 4, on voit que le dispositif d'asservissement selon l'invention est constitué de trois palpeurs 5, 6 et 7 portés par des bras 8, 9 et 10 pouvant pivoter autour d'un axe vertical 11 solidaire du bâti 4 portant l'ensemble de soudage.

Le palpeur inférieur 5 est pourvu d'un bec 5a portant une semelle de contact 5b venant toucher la base du panneau 1 au plus près possible du point de soudage P et il constitue le palpeur principal qui a pour but de maintenir constante la distance de la torche 3 au point de soudage P. Ce palpeur 5 est situé rigoureusement dans le même plan A-A' que la torche de soudage 3 (figure 2). Au-dessus sont disposés deux palpeurs secondaires 6 et 7 dont les doigts 6a et 7a se situent de part et d'autre du plan A-A' et à une certaine distance, que l'on peut faire varier afin de rendre l'ensemble plus sensible. Ces palpeurs 6 et 7 ont pour objet de provoquer le pivotement de la torche de soudage 3 lorsque se présente une onde, afin qu'elle reste parfaitement perpendiculaire au cordon de soudage en P. Chacune des extrémités des bras 8, 9 et 10 pivotant autour de l'axe vertical 11 porte une poulie 8a, 9a et 10a. Ces poulies entraînent chacune par l'intermédiaire d'une petite courroie 8b, 9b, 10b, un potentiomètre 12, respectivement 13, et 14, monté sur le bâti 4. En outre, les palpeurs sont maintenus au contact du panneau à ondes 1 au moyen de ressorts 15 travaillant à la traction fixés d'une part, au bâti 4 et d'autre part, aux bras 8, 9 et 10.

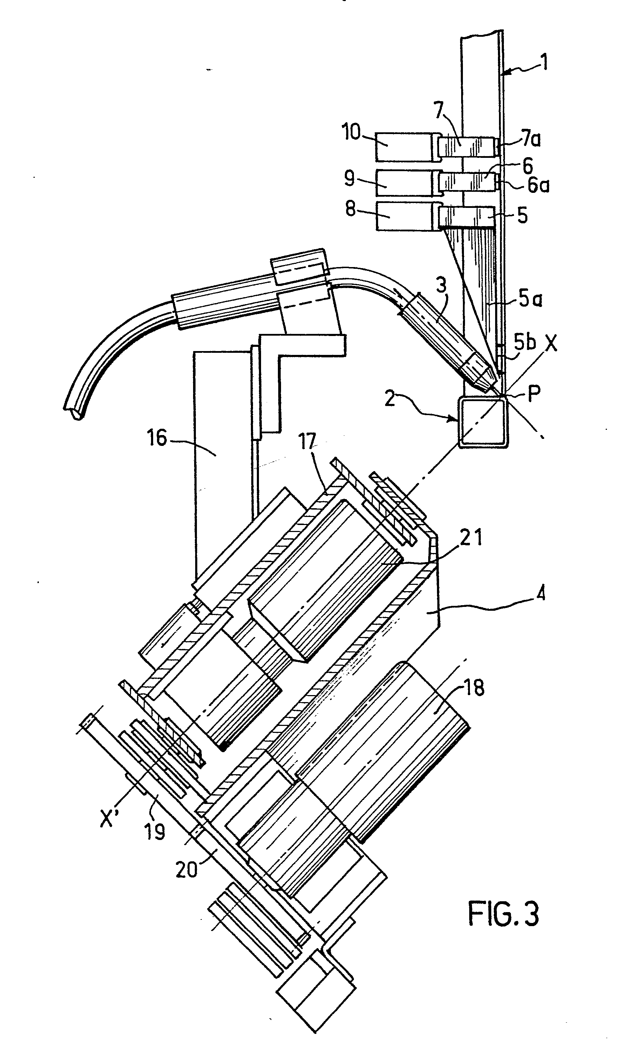

La torche de soudage 3 est montée sur une potence 16 solidaire d'un support incliné 17 pouvant pivoter autour d'un axe X-X' concourant avec l'axe de la torche 3 au point de soudage P sous l'action d'un moto-réducteur 18 (figure 3). Pour ce faire le support incliné 17 est solidaire d'une roue dentée 19 commandée par une seconde roue dentée 20 calée sur l'arbre de sortie du motoréducteur 18. Ce montage permet d'assurer l'inclinaison de la torche à droite ou à gauche du plan vertical passant par X-X'. Sous le support 17 est disposé un second motoréducteur 21 destiné à déplacer longitudinalement la potence 16 avec la torche de soudage 3, selon l'axe X-X' afin d'assurer un balayage transversal à la direction générale du cordon de soudure pour sa réalisation correcte.

Cet ensemble est porté par un bâti 4 pouvant pivoter autour d'un axe vertical 22 sous l'action d'un vérin électrique 23, permettant l'approche ou l'éloignement de la torche de soudage 3 du point P. Le palpeur principal 8 commande le vérin électrique 23 par l'intermédiaire du potentiomètre 12 lui-même entraîné par la rotation de la poulie 8a du bras 8.

Les palpeurs secondaires 9 et 10 commandent le motoréducteur 18 par l'intermédiaire de leurs potentiomètres 13 et 14 qui délivrent une information positive ou négative, provoquant l'inclinaison de l'outil dans un sens ou dans l'autre. On peut obtenir une plus grande sensibilité de l'ensemble en décalant un peu plus les palpeurs secondaires 9 et 10 de part et d'autre du palpeur principal 8.

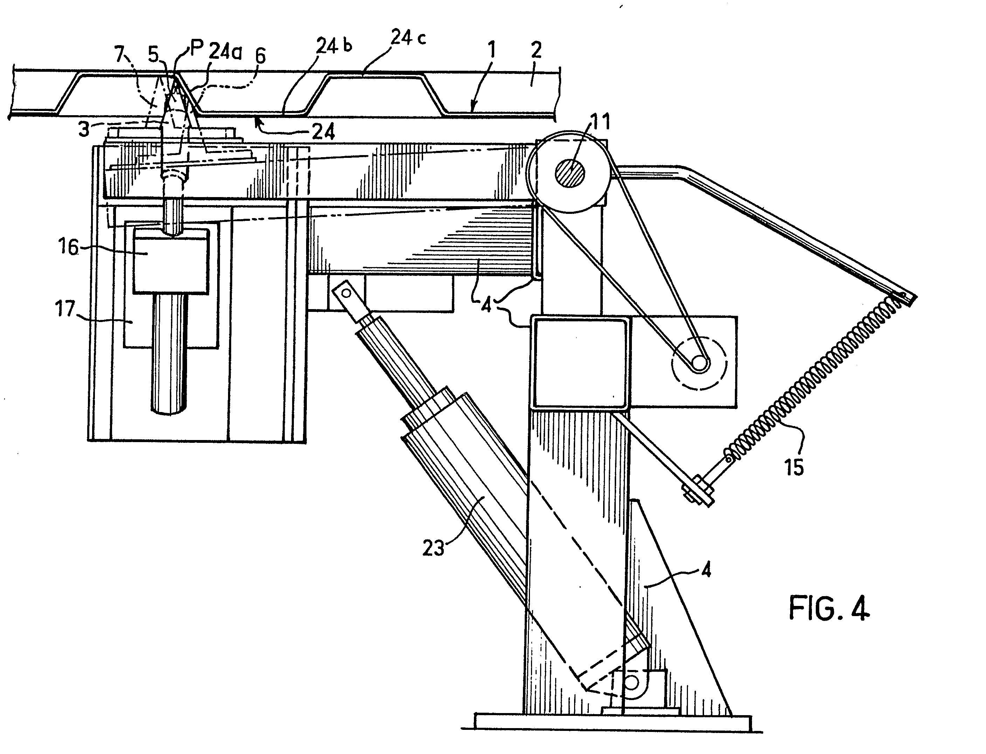

Dans l'exemple présenté, les réglages de départ étant effectués et la torche 3 correctement positionnée, c'est-à-dire de façon à ce que son axe fasse un angle de 90° avec l'axe X-X' de pivotement du support et concourt avec lui au point de soudage P, l'ensemble de soudage se déplace de gauche vers la droite en tirant les palpeurs 5, 6 et 7 dont les extrémités 5b, 6a et 7a sont au contact du panneau 1. Lorsqu'une onde 24 en relief se présente (figure 4), c'est d'abord le palpeur 6 qui rencontre la première paroi saillante 24a de l'onde, ce qui le fait pivoter autour de l'axe 11 d'un certain angle en faisant tourner la poulie 9a entraînant le potentiomètre 13 qui délivre alors une information au motoréducteur 18 qui fait pivoter le support 17 avec la potence 16 autour de l'axe X-X' inclinant la torche 3 à gauche. La torche 3 continuant à se déplacer, le palpeur 5 rencontre à son tour la paroi en saillie 24a et par le même mécanisme agit sur le potentiomètre 12 qui commande le vérin électrique 23 provoquant une rétraction égale à l'écartement entre une paroi d'onde proche 24b et une paroi d'onde éloignée 24c. Ayant pivoté vers la gauche la torche se trouve toujours perpendiculairement au cordon de soudage. Le mouvement de translation vers la droite se poursuivant, le palpeur 7 rencontre à son tour la paroi 24a et par le même mécanisme agit sur le potentiomètre 14 qui délivre une information au motoréducteur 18 provoquant la rotation du support 17 d'une valeur égale, mais en sens inverse, à la précédente rotation, la torche 3 pivotant alors vers la droite, se retrouvant encore perpendiculairement au cordon de soudage en cours de formation sur la face plane de l'onde 24b.

Si les palpeurs rencontrent une déclivité, il se produit le mécanisme inverse, c'est-à-dire que la torche pivote alors vers la droite.

En ce qui concerne le palpeur principal 5, si une déformation se présente, bosse ou creux dus à la chaleur, il agit de même sur le vérin électrique 23 qui éloigne ou approche la torche de manière à ce que la distance au point de soudage reste constante.

6

Un tel dispositif ne nécessite aucun programme, s'affranchit du cumul des tolérances, permet de traiter des panneaux ayant des ondes différentes et permet surtout l'orientation de l'outil qui ne peut être réalisé dans les copieurs hydrauliques. De même les informations délivrées par les palpeurs peuvent être décalées dans le temps.

REVENDICATIONS

1. - Dispositif d'asservissement de la position et de la vitesse d'une torche de soudage (3), caractérisé en ce qu'il comporte un palpeur principal (5) et deux palpeurs secondaires (6, 7), détectant les variations de profil directement sur la pièce (1) à traiter, les informations étant transmises d'une part à un organe moteur (23) afin que la distance de la torche (3) au point de soudage (P) soit constante ; et d'autre part, à un deuxième organe moteur (18) afin que la torche (3) soit toujours sensiblement perpendiculaire au cordon de soudage en cours d'élaboration en (P) par pivotement autour d'un axe (X-X') concourant avec ledit point (P).

2. - Dispositif d'asservissement de la position et de la vitesse d'une torche de soudage, selon la revendication 1, caractérisé en ce que le palpeur principal (5) est situé dans le même plan (A-A') que l'axe de torche (3).

3. - Dispositif d'asservissement de la position et de la vitesse d'une torche de soudage, selon la revendication 1, caractérisé en ce que les palpeurs secondaires (6, 7) sont situés de part et d'autre du palpeur principal (5) avec un écartement réglable dans la direction du cordon de soudure en cours d'élaboration et qu'ils commandent l'orientation de la torche (3) par action sur un organe de motorisation (18).

4. - Dispositif d'asservissement de la position et de la vitesse d'une torche de soudage, selon la revendication 1, caractérisé en ce que les palpeurs secondaires (6, 7) permettent par leur configuration relative de déterminer non seulement l'orientation de la torche mais également sa vitesse de déplacement, de façon à ce que sa vitesse relative par rapport au joint à souder puisse être ajustée quelle que soit la forme du profil.

5. - Dispositif d'asservissement de la position et de la vitesse d'une torche de soudage, selon la revendication 1, caractérisé en ce que la torche de soudage (3) est solidaire d'un support incliné (17) pivotant sous l'action d'un organe moteur (18) commandé par les palpeurs secondaires (6, 7) autour d'un axe (X-X') concourant avec l'axe de la torche de soudage au point (P) et formant avec lui un angle de 90°.

6. - Dispositif d'asservissement de la position et de la vitesse d'un outil, en l'occurence une torche de soudage, selon la revendication 1, caractérisé en ce que le support (17) de la torche (3) est porté par un bâti (4) pivotant autour d'un axe vertical (22) sous l'action d'un organe moteur (23) commandé par le palpeur principal (5).

7. - Dispositif d'asservissement de la position et de la vitesse d'un outil, en l'occurence une torche de soudage, selon l'une quelconque des revendications 1 à 6, caractérisé en ce que la position de la torche (3) est commandée directement par la configuration de la pièce.

8. - Application de dispositif d'asservissement selon l'une quelconque des revendications 1 à 7 au soudage en bout sur longeron (2) d'un panneau à ondes (1).

FIG.1

FIG.2

00571131

FIG.3

FIG. 4

0057131

### Office européen des brevets

## RAPPORT DE RECHERCHE EUROPEENNE

EP 82 40 0098

| DOCUMENTS CONSIDERES COMME PERTINENTS | | | CLASSEMENT DE LA DEMANDE (Int. Cl. 3) |
|---|---|---|---|
| Catégorie | Citation du document avec indication, en cas de besoin, des parties pertinentes | Revendication concernée | |
| X,Y | FR - A - 2 251 400 (CECIL) <br><br> * page 27, lignes 8,9 * | 1,5-7 | B 23 K 9/02 <br> B 23 Q 15/14 |
| X,Y | FR - A- 2 403 592 (PEIFFERT) <br><br> * pages 5,6 * | 1-4,7 | |
| Y | FR - A - 1 250 110 (WELDING RESEARCH) <br><br> * pages 5 et 6 * <br> & GB - A - 949 313 <br> US - A - 2 971 079 | 1,3-7 | **DOMAINES TECHNIQUES RECHERCHES (Int. Cl. 3)** <br><br> B 23 K 9/00 <br> B 23 Q 15/00 |
| X,E, P | CH - A - 621 278 (ATELIERS DE VEVEY) <br><br> * résumé * | 1-8 | |

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

| X | Le présent rapport de recherche a été établi pour toutes les revendications | |
|---|---|---|
| **Lieu de la recherche** <br> La Haye | **Date d'achèvement de la recherche** <br> 10-03-1982 | **Examinateur** <br> HOORNAERT |

OEB Form 1503.1 06.78